(19) Europäisches Patentamt
European Patent Office
Office européen des brevets

(11) **EP 3 110 774 B1**

(12) **FASCICULE DE BREVET EUROPEEN**

(45) Date de publication et mention
de la délivrance du brevet:
**06.12.2017 Bulletin 2017/49**

(51) Int Cl.:
***C04B 35/80*** *(2006.01)*        ***D03D 11/00*** *(2006.01)*

(21) Numéro de dépôt: **15709280.0**

(22) Date de dépôt: **19.02.2015**

(86) Numéro de dépôt international:
**PCT/FR2015/050405**

(87) Numéro de publication internationale:
**WO 2015/124872 (27.08.2015 Gazette 2015/34)**

(54) **PIÈCE EN MATÉRIAU COMPOSITE OXYDE/OXYDE A RENFORT 3D ET SON PROCÉDÉ DE FABRICATION**

TEIL AUS EINEM OXID/OXIDVERBUNDSTOFF FÜR 3D-VERSTÄRKUNG UND VERFAHREN ZUR HERSTELLUNG DAVON

PART MADE FROM AN OXIDE/OXIDE COMPOSITE MATERIAL FOR 3-D REINFORCING AND METHOD FOR MANUFACTURE OF SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.02.2014 FR 1451447**

(43) Date de publication de la demande:
**04.01.2017 Bulletin 2017/01**

(73) Titulaire: **Safran Ceramics**
**33185 Le Haillan (FR)**

(72) Inventeurs:
• **DISS, Pascal**
**33160 Saint Aubin de Medoc (FR)**

• **BOUILLON, Eric**
**33185 Le Haillan (FR)**
• **LAVASSERIE, Eric**
**33130 Begles (FR)**

(74) Mandataire: **Desormiere, Pierre-Louis et al**
**Cabinet Beau de Loménie**
**158, rue de l'Université**
**75340 Paris Cedex 07 (FR)**

(56) Documents cités:
**EP-A1- 0 130 105      FR-A1- 2 526 785**
**FR-A1- 2 702 475      FR-A1- 2 953 885**

**Description**

Arrière-plan de l'invention

La présente invention concerne un procédé de fabrication d'une pièce en matériau composite de type oxyde/oxyde, c'est-à-dire comportant un renfort fibreux formé à partir de fibres en oxyde réfractaire densifié par une matrice également en oxyde réfractaire.

Dans leur grande majorité, les pièces en matériau composite oxyde/oxyde sont élaborées des deux manières suivantes :

- réalisation d'une texture fibreuse par empilement de strates bidimensionnelles de tissu en fibres oxyde et imprégnation de la texture avec une suspension contenant des charges oxyde, la préforme chargée étant ensuite soumise à un frittage,
- réalisation d'une texture fibreuse par bobinage de fils de fibres oxyde préalablement plongés dans suspension contenant des charges oxyde, la préforme chargée étant ensuite soumise à un frittage.

Toutefois, les caractéristiques mécaniques des matériaux composite oxyde/oxyde obtenus par ces procédés d'élaboration restent limitées dans certaines directions. En particulier, ces matériaux présentent une faible résistance au cisaillement.

La réalisation de textures fibreuses obtenues par tissage tridimensionnel entre des fils continus de chaîne et de trame permet d'augmenter la résistance mécanique du matériau. Dans ce cas, seuls les procédés utilisant un gradient de pression, comme les procédés de type moulage par injection dits « RTM » ou aspiration de poudre submicronique dits « APS », permettent de faire pénétrer une suspension chargée dans la texture fibreuse dont l'épaisseur peut atteindre plusieurs dizaines de millimètres selon les applications visées.

Le taux volumique de fibres des matériaux composite oxyde/oxyde est un des paramètres fondamentaux à considérer pour atteindre les propriétés mécaniques finales du matériau. C'est pourquoi, lors de l'élaboration d'un matériau composite oxyde/oxyde, la texture fibreuse doit être compactée à l'aide d'un outillage spécifique. Au cours de l'étape de séchage en outillage, un réseau de fissures se forme dans la matrice présente entre les fils. Ce réseau de fissures conduit à une expansion de la préforme imprégnée lors du démoulage, qui entraîne une diminution importante des propriétés mécaniques du matériau au stade final.

Un moyen connu pour remédier à cette expansion consiste à ajouter dans la suspension de départ un liant organique, par exemple de l'acide polyvinylique (PVA), qui contribue à la cohésion du système après séchage de la préforme en empêchant le phénomène d'expansion décrit ci-avant.

Pour obtenir des caractéristiques mécaniques élevées en une seule étape d'imprégnation, il est nécessaire d'employer une barbotine comprenant un pourcentage volumique de charges suffisant. Dans ce cas, l'ajout d'un liant organique modifie le comportement de la barbotine. Celle-ci passe d'un comportement newtonien (viscosité indépendante de la vitesse d'écoulement) à un comportement rhéofluidifiant (viscosité dépendante de la vitesse d'écoulement). Ce phénomène entraîne l'apparition d'une hétérogénéité de composition dans le matériau lors d'une élaboration par voie APS.

Plus précisément, à l'échelle globale du matériau, la mauvaise maîtrise de l'écoulement de la suspension dans la texture fibreuse conduit à l'apparition d'un gradient de composition (ratio fibres/matrice) dans l'épaisseur du matériau. Plus localement dans le matériau, des porosités dont la taille et la répartition ne sont pas contrôlées se forment après stabilisation des charges par frittage.

EP0130105 divulgue une pièce en matériau composite réfractaire comprenant un renfort fibreux constitué d'une pluralité de couches de fils de chaîne et de couches de fils de trame liées entre elles suivant un tissage tridimensionnel, les espaces présents entre les fils du renfort étant remplis par une matrice en oxyde réfractaire.

Objet et résumé de l'invention

La présente invention a pour but de remédier aux inconvénients précités et de proposer une solution qui permet de disposer de pièces en matériau composite oxyde/oxyde élaborées par voie APS, en une seule étape d'imprégnation, sans nécessiter l'emploi d'un liant organique supplémentaire, les pièces comprenant un renfort obtenu par tissage tridimensionnel et présentant des propriétés mécaniques améliorées par rapport aux pièces de l'art antérieur.

A cet effet, l'invention propose une pièce en matériau composite oxyde/oxyde comprenant un renfort fibreux constitué d'une pluralité de couche de fils de chaîne et de couches de fils de trame liées entre elles suivant un tissage tridimensionnel, les espaces présents entre les fils du renfort étant remplis par une matrice en oxyde réfractaire, caractérisée en ce que le renfort fibreux présente une armure de tissage choisie parmi une des armures suivantes : interlock, multi-toile, multi-satin et multi-sergé, et une contexture en chaîne et en trame comprise entre 4 fils/cm et 20 fils/cm, et en ce que le renfort fibreux présente un taux volumique de fibres compris entre 40% et 51%.

Avec un renfort fibreux présentant les caractéristiques définies ci-avant, et en prenant le soin d'ajuster le taux volumique de fibres à la variante de texture choisie, les espaces présents entre les fils du renfort ont des dimensions inférieures à cinq fois la section maximale des fils du renfort fibreux. En limitant ainsi la taille des espaces présents entre les fils, on limite la taille des blocs de matrice présents dans le matériau de manière à ce que chaque bloc de matrice ne comporte aucune dimension qui est supérieure à cinq fois la section maximale des fils du renfort. La Titulaire a constaté qu'en limitant de cette manière la taille des blocs de matrice dans le matériau oxyde/oxyde, il était possible d'empêcher l'apparition de fissures dans celui-ci. La pièce en matériau composite oxyde/oxyde présente, par conséquent, des propriétés mécaniques améliorées.

Selon un aspect particulier de la pièce de l'invention, celle-ci présente en traction monotone, à température ambiante et dans le sens chaîne :

- un module d'élasticité compris entre 120 GPa et 170 GPa,
- une déformation à rupture au moins égale à 0,35%,
- une contrainte à rupture supérieure à 250MPa.

Les fils du renfort fibreux peuvent être formés de fibres constituées d'un ou plusieurs des matériaux suivants : l'alumine, la mullite, la silice, un aluminosilicate et un borosilicate.

Le matériau de la matrice peut être choisi parmi : l'alumine, la mullite, la silice, un aluminosilicate et un aluminophosphate. La matrice peut être éventuellement dopée avec un ou plusieurs matériaux permettant de rajouter des fonctions spécifiques au matériau final de la pièce.

L'invention concerne également un procédé de fabrication d'une pièce en matériau composite oxyde/oxyde comprenant les étapes suivantes :

- formation d'une texture fibreuse par tissage tridimensionnel de fils en oxyde réfractaire,
- compactage de la texture fibreuse,
- placement d'un côté de la texture fibreuse d'une barbotine contenant une poudre submicronique de particules d'oxyde réfractaire,
- établissement d'une différence de pression pour forcer la barbotine à traverser la texture fibreuse,
- filtration du liquide de barbotine ayant traversé la texture fibreuse pour retenir la poudre de particules d'oxyde réfractaire à l'intérieur de ladite texture, et
- séchage de la préforme chargée,
- frittage de la poudre submicronique de particules d'oxyde réfractaire afin de former une matrice d'oxyde réfractaire dans la préforme,

caractérisé en ce que, lors de l'étape de la formation de la texture fibreuse, les fils sont tissés suivant une armure de tissage choisie parmi une des armures suivantes : interlock, multi-toile, multi-satin et multi-sergé, avec une contexture en chaîne et en trame comprise entre 4 fils/cm et 20 fils/cm, et ce que, après l'étape de compactage, ladite texture fibreuse présente un taux volumique de fibres compris entre 40% et 51%.

On obtient ainsi des pièces en matériau composite oxyde/oxyde à renfort tissé 3D qui sont parfaitement homogènes dans tout leur volume et qui ne comportent pas de fissures ni de porosités susceptibles de dégrader les propriétés mécaniques de la pièce.

Les fils de la préforme peuvent être des fils formés de fibres constituées d'un ou plusieurs des matériaux suivants : l'alumine, la mullite, la silice, un aluminosilicate et un borosilicate.

Les particules submicroniques peuvent être en un matériau choisi parmi : l'alumine, la mullite, la silice, un aluminosilicate et un aluminophosphate, avec éventuellement des charges supplémentaires permettant de rajouter des fonctions au matériau de la pièce.

Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :

- la figure 1 illustre un plan d'une armure de tissage tridimensionnel interlock conformément à un mode de réalisation de la texture fibreuse de l'invention,
- la figure 2 illustre un plan d'une armure de tissage tridimensionnel multi-toile conformément à un mode de réalisation de la texture fibreuse de l'invention,
- la figure 3 illustre un plan d'une armure de tissage tridimensionnel multi-satin conformément à un mode de réalisation de la texture fibreuse de l'invention,

- la figure 4 illustre un plan d'une armure de tissage tridimensionnel multi-sergé conformément à un mode de réalisation de la texture fibreuse de l'invention,
- la figure 5 est une vue schématique montrant l'infiltration d'une texture fibreuse avec des particules d'oxyde réfractaire par voie APS,
- la figure 6 est une photographie microscopique d'une coupe d'une pièce en matériau composite oxyde/oxyde fabriquée selon l'art antérieur,
- les figures 7A, 7B et 7C sont des photographies microscopique d'une pièce en matériau composite oxyde/oxyde conforme à l'invention,
- la figure 8 est un schéma montrant le domaine de conception de la texture fibreuse selon l'invention.

### Description détaillée de modes de réalisation

Le procédé de fabrication d'une pièce en matériau composite oxyde/oxyde conforme à la présente invention débute par la réalisation d'une texture fibreuse destinée à former le renfort de la pièce.

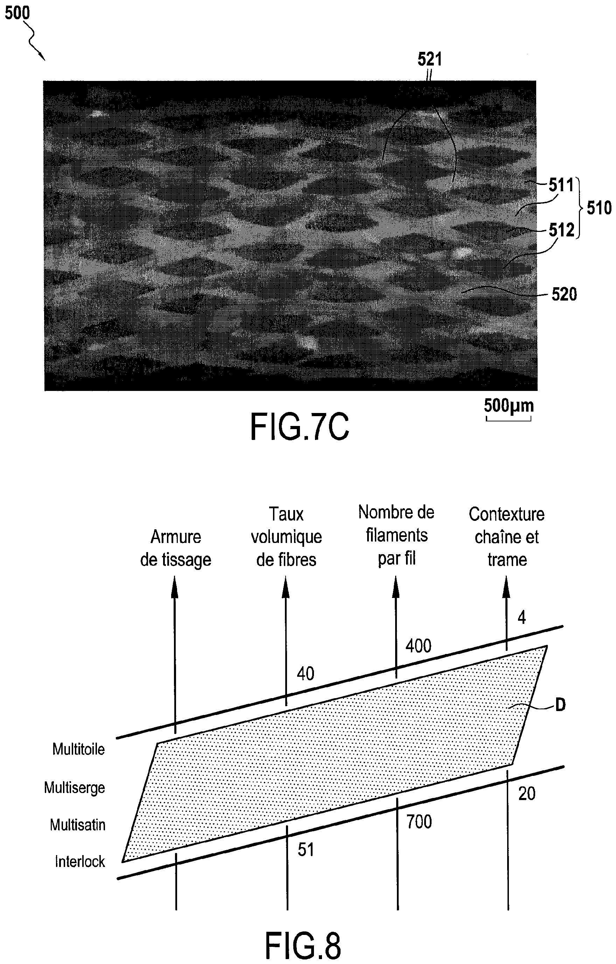

Conformément à l'invention, la texture fibreuse est réalisée par tissage tridimensionnel entre une pluralité de fils de chaîne et une pluralité de fils de trame, les couches de fils de chaîne étant liées entre elles par des fils de trame suivant un tissage tridimensionnel correspondant à une armure de tissage choisie parmi une des armures suivantes : interlock, multi-toile, multi-satin et multi-sergé, et avec une contexture en chaîne et en trame comprise entre 4 fils/cm et 20 fils/cm, la texture ainsi obtenue étant ensuite compactée pour présenter un taux volumique de fibres compris entre 40% et 51%, les fils ou fibres de la texture fibreuse comportant chacun un nombre de filaments compris en 400 et 700 filaments. La figure 8 représente le domaine de conception D de la texture fibreuse selon l'invention, le domaine D définissant les valeurs que doivent présenter les paramètres relatifs à la texture fibreuse selon l'invention.

Ces caractéristiques de la texture fibreuse permettent d'assurer qu'il n'aura pas d'espaces entres les fils d'une dimension supérieure à 5 fois la section maximale des fils. Ainsi, une fois la matrice formée au sein de la texture, les blocs de matrice présents entre les fils de la texture présenteront des dimensions toutes inférieures à 5 fois la section maximale des fils, ce qui permet d'empêcher l'apparition de fissures dans le matériau final de la pièce.

Par « bloc de matrice », on entend ici toute portion continue de matrice située entre deux fils ou plus. Par « dimension d'un bloc de matrice », on entend ici toute longueur, largeur, profondeur, épaisseur, hauteur, ou encore diamètre d'un bloc de matrice et, d'une manière encore plus générale toute taille qui peut être mesurée dans une direction rectiligne.

Par "contexture", on désigne ici le nombre de fils par unité de longueur en sens chaîne et en sens trame.

Par « tissage tridimensionnel » ou « tissage 3D », on entend ici un mode de tissage par lequel certains au moins des fils de chaîne lient des fils de trame sur plusieurs couches de trame.

Dans tout le texte qui suit et dans tous les dessins, il est mentionné et représenté par convention et souci de commodité, que ce sont les fils de chaîne qui sont déviés de leurs trajets pour saisir des fils de trame d'une couche de trame ou de plusieurs couches de trames. Toutefois, une inversion des rôles entre chaîne et trame est possible, et doit être considérée comme couverte aussi par les revendications.

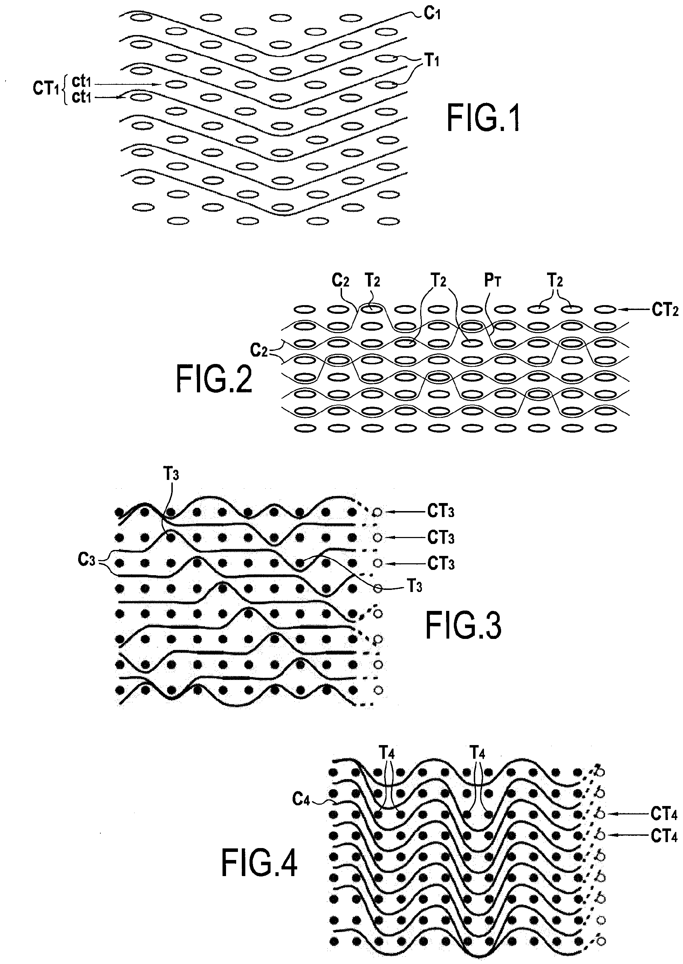

Par « armure ou tissu interlock », on entend ici une armure de tissage 3D dont chaque couche de fils de chaîne lie plusieurs couches de fils de trame avec tous les fils de la même colonne de chaîne ayant le même mouvement dans le plan de l'armure. La figure 1 est une vue de 8 plans d'une armure interlock à 7 couches de fils de chaîne $C_i$ et 8 couches $CT_1$ de fils de trame $T_1$. Dans l'armure interlock illustrée, une couche $CT_1$ de fils de trame $T_1$ est formée de deux demi-couches $ct_1$ adjacentes décalées l'une par rapport à l'autre dans le sens chaîne. On a donc 16 demi-couches de fils de trame positionnées en quinconce. Chaque fil de chaîne $C_i$ lie 3 demi-couches de fils de trame. On pourrait aussi adopter une disposition en trame non en quinconce, les fils de trame de deux couches de fils de trame voisines étant alignés sur des mêmes colonnes.

A titre d'exemple, la texture fibreuse selon l'invention peut être réalisée par tissage 3D suivant une armure interlock telle que représentée sur la figure 1 et avec une contexture en chaîne et en trame de 8 fils/cm, 10 fils/cm et 12 fils/cm ou avec une contexture de 12 fils/cm en chaîne et de 5 fils/cm en trame.

Par « armure ou tissu multi-toile », on désigne ici un tissage 3D avec plusieurs couches de fils de trame dont l'armure de base de chaque couche est équivalente à une armure de type toile classique mais avec certains points de l'armure qui lient les couches de fils de trame entre elles. La figure 2 montre un plan de tissu multi-toile dans lequel des fils de chaîne $C_2$ sont de temps en temps déviés de leur trajet de toile 2D classique associé à une couche $CT_2$ de fils de trame pour saisir un fil de trame $T_2$ d'une couche voisine et former des points de toile particuliers $P_T$ liant deux couches de fils de trame voisines. Au niveau d'un point de toile particulier $P_T$, le fil de chaîne $C_2$ passe autour de deux fils de trame $T_2$ situés sur une même colonne dans deux couches $CT_2$ de trame voisines.

A titre d'exemple, la texture fibreuse selon l'invention peut être réalisée par tissage 3D suivant une armure multi-toile telle que représentée sur la figure 2 et avec une contexture en chaîne et en trame de 20 fils/cm.

Par « armure ou tissu multi-satin », on désigne ici un tissage 3D avec plusieurs couches de fils de trame dont l'armure de base de chaque couche est équivalente à une armure de type satin classique mais avec certains points de l'armure qui lient les couches de fils de trame entre elles. La figure 3 montre un plan d'un tissu multi-satin, dans lequel chaque fil de chaîne $C_3$, à l'exception des fils de chaîne situés en surface de texture, est dévié alternativement dans un sens et dans l'autre de manière à saisir un fil de trame $T_3$ sur n d'une première couche $CT_3$ de fils de trame et un fil de trame $T_3$ sur n d'une deuxième couche $CT_3$ de fils de trame adjacente à la première, n étant un nombre entier supérieur à 2 réalisant ainsi une liaison entre deux couches.

A titre d'exemple, la texture fibreuse selon l'invention peut être réalisée par tissage 3D suivant une armure multi-satin telle que représentée sur la figure 3 et avec une contexture en chaîne et en trame de 10 fils/cm.

Par « armure ou tissu multi-sergé », on désigne ici un tissage 3D avec plusieurs couches de fils de trame dont l'armure de base de chaque couche est équivalente à une armure de type sergé classique mais avec certains points de l'armure qui lient les couches de fils de trame entre elles. La figure 4 montre un plan d'un tissu multi-sergé, dans lequel chaque fil de chaîne $C_4$, à l'exception des fils de chaîne situés en surface de texture, est dévié de manière à saisir par 2 des fils de trame $T_4$ d'une couche $CT_4$ de fils de trame ou de plusieurs couches voisines $CT_4$ de fils trame.

A titre d'exemple, la texture fibreuse selon l'invention peut être réalisée par tissage 3D suivant une armure multi-sergé telle que représentée sur la figure 4 et avec une contexture en chaîne et en trame de 8 fils/cm.

Les fils utilisés pour tisser la texture fibreuse destinée à former le renfort fibreux de la pièce en matériau composite oxyde/oxyde peuvent être notamment formés de fibres constituées d'un des matériaux suivants: l'alumine, la mullite, la silice, un aluminosilicate, un borosilicate, ou d'un mélange de plusieurs de ces matériaux.

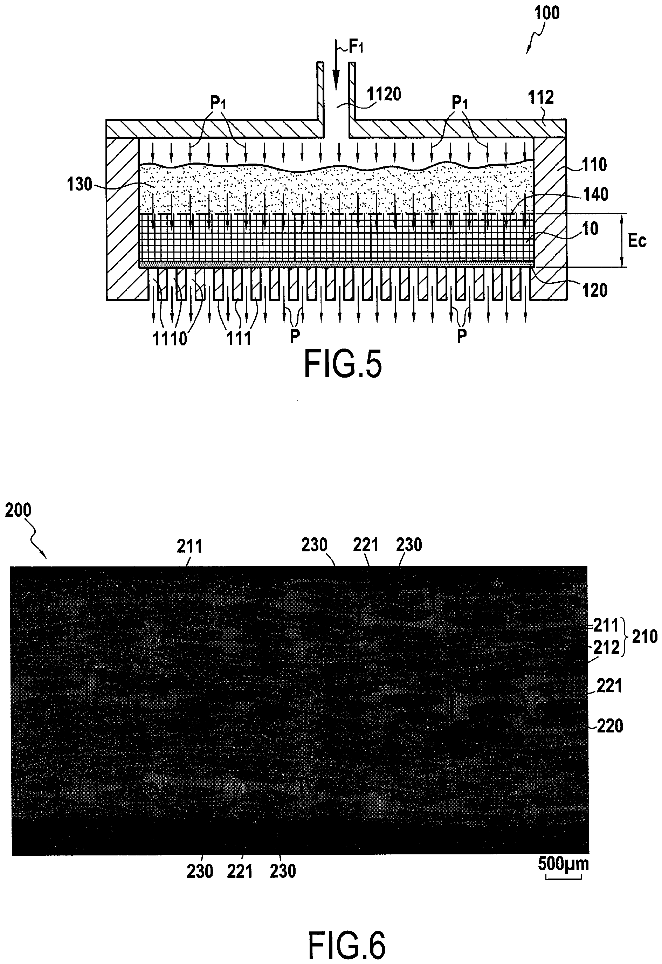

Une fois la texture fibreuse réalisée, celle-ci est compactée afin d'ajuster son taux volumique de fibres à une valeur comprise entre 40% et 51%. Le compactage s'effectue dans un outillage 100 qui sera utilisé pour le dépôt au sein de la texture fibreuse de particules d'oxyde réfractaire comme décrit ci-après en détails. Le compactage de la texture 10 est réalisé au moyen d'une grille 140 ajourée de manière à laisser passer la barbotine utilisée lors de l'opération suivante. La grille 140 est maintenue en appui contre la texture fibreuse par des moyens de calage, par exemple des vis (non représentées sur la figure 5), à une position dans l'outillage 100 correspondant à l'épaisseur de compactage Ec que l'on souhaite appliquer à la texture. Lorsqu'il n'y a pas d'expansion de la texture fibreuse après démoulage (i.e. après imprégnation par voie APS et séchage de la texture), l'épaisseur finale de la pièce est égale à l'épaisseur de compactage Ec.

Le taux volumique de fibres correspond à la fraction volumique de la texture occupée par les fibres dans le volume total de la texture réalisée. Dans le cas par exemple d'une texture fibreuse présentant la forme d'une plaque plane, les paramètres suivants sont utilisés pour calculer le taux volumique de fibres :

- longueur L de la texture,
- largeur l de la texture,
- épaisseur e de la texture,
- densité d de la fibre
- masse surfacique Ms de la texture.

En effet, le taux volumique de fibres Tvf est égal au volume de fibres Vf divisé par le volume total de la texture. Le volume de fibres utilisées Vf est égal à la masse de fibres utilisées, soit Ms.L.l, divisé par le densité d des fibres, soit : Vf = Ms.L.l/d.

Le volume total de la structure fibreuse en forme de plaque étant égal à L.l.e, le taux volumique de fibres Tvf se calcul avec la formule suivante :

$$Tvf = Ms/(e.d) \qquad\qquad (1)$$

Par conséquent, lorsque l'on souhaite obtenir une texture fibreuse présentant un taux volumique de fibres ayant une valeur comprise entre 40% et 51%, on règle l'épaisseur de compactage de la texture fibreuse de manière à ce que cette dernière présente après compactage une épaisseur e permettant d'obtenir un taux volumique de fibres compris entre 40% et 51%, l'épaisseur de compactage étant déterminée en fonction de la masse surfacique Ms de la texture et de la densité de la fibre comme indiqué par la formule (1).

Des particules d'oxyde réfractaire sont ensuite déposées au sein de la texture fibreuse par la technique bien connue d'aspiration de poudres submicroniques (APS). A cet effet et comme illustrée sur la figure 5, une texture fibreuse 10 réalisée suivant un des tissages 3D défini ci-avant, est placée dans une enceinte 110 d'un outillage 100. Un filtre 120 est préalablement interposé entre le fond 111 de l'enceinte 110 et la texture fibreuse 10, le fond 111 comportant des ouvertures 1110. Après placement de la texture 10 dans l'enceinte 110, une barbotine 130, destinée à permettre la formation d'une matrice d'oxyde réfractaire dans la texture, est déposée sur la face supérieure de la texture fibreuse 10, c'est-à-dire la face de la texture opposée à celle en regard avec le filtre 120. La barbotine 130 correspond à une suspension contenant une poudre submicronique de particules d'oxyde réfractaire. La barbotine 130 peut par exemple correspondre à une suspension aqueuse constituée de poudre d'alumine dont la dimension particulaire moyenne (D50) est comprise entre 0,1 $\mu$m et 0,3 $\mu$m et dont la fraction volumique est comprise entre 27% et 42%, la suspension étant acidifiée par de l'acide nitrique (pH compris entre 1,5 et 4). En outre de l'alumine, les particules d'oxyde réfractaires constituant la poudre submicronique peuvent être également en un matériau choisi parmi la mullite, la silice, un aluminosilicate et un aluminophosphate. Les particules d'oxyde réfractaire peuvent être en outre mélangées avec des particules de zircone, d'oxydes de terres rares ou toute autre charge permettant de rajouter des fonctions spécifiques au matériau final (noir de carbone, graphite, carbure de silicium, etc.).

Après fermeture de l'enceinte 110 par un couvercle 112, un flux gazeux $F_1$, constitué d'air comprimé ou d'azote, est introduit dans l'enceinte 110 via un conduit 1120. Le flux $F_1$ assure l'application d'une pression $P_1$ qui force la barbotine 130 à pénétrer dans la texture 10. En combinaison avec l'introduction du flux $F_1$, un pompage P, par exemple au moyen d'une pompe à vide primaire (non représentée sur la figure 5), est réalisé du côté externe du fond 111 de l'enceinte 110 au travers des ouvertures 1110 de manière à forcer la barbotine 130 à migrer au travers de la texture 10. Le filtre 120 est calibré pour retenir les particules d'oxyde réfractaires présentes dans la barbotine pendant que le liquide de cette dernière est évacué par les ouvertures 1110. Les particules d'oxyde réfractaire se déposent ainsi progressivement par sédimentation dans la texture.

On obtient alors une préforme fibreuse chargée de particules d'oxyde réfractaire, ici des particules d'alumine du type décrit précédemment. La préforme est ensuite séchée à une température comprise entre 35°C et 95°C puis soumise à un traitement thermique de frittage sous air à une température comprise entre 1000°C et 1200°C afin de fritter les particules d'oxyde réfractaire ensemble et former ainsi une matrice en oxyde réfractaire dans la préforme. On obtient alors une pièce en matériau composite oxyde/oxyde munie d'un renfort fibreux obtenu par tissage 3D et qui ne comporte pas de fissures dans les blocs de matrice présents entre les fils du renfort.

La figure 6 est une photographie microscopique d'une coupe d'une pièce 200 en matériau composite oxyde/oxyde selon l'art antérieur, à savoir ici un renfort en fibres d'alumine densifié par une matrice alumine et dont le renfort fibreux 210 a été formé ici par tissage 3D entre des couches de fils de trame 211 et de fils de chaîne 212 suivant une armure interlock et avec une contexture en chaîne et en trame de 8 fils/cm et avec un taux volumique de fibres de 38%. La pièce 200 a été fabriquée de la même manière que décrite précédemment, c'est-à-dire par voie APS suivie d'un séchage et d'un frittage de la préforme chargée. Comme indiqué sur la figure 6, l'armure de tissage et la contexture définies pour le renfort fibreux 210 conduisent à former des blocs 221 de matrice 220 dans le matériau qui présente, au moins dans une direction, une dimension qui est supérieure à cinq fois la section maximale des fils du renfort, ici la section d'un fil de trame 211. Comme on peut le voir sur la figure 6, la limitation de la taille des blocs de matrice à moins de cinq fois la section maximale des fils du renfort n'étant pas respectée, des fissures 230 se sont formées dans le matériau. La présence des fissures 230, qui pour certaines traversent même des fils du renfort, dégradent significativement les propriétés mécaniques de la pièce 200.

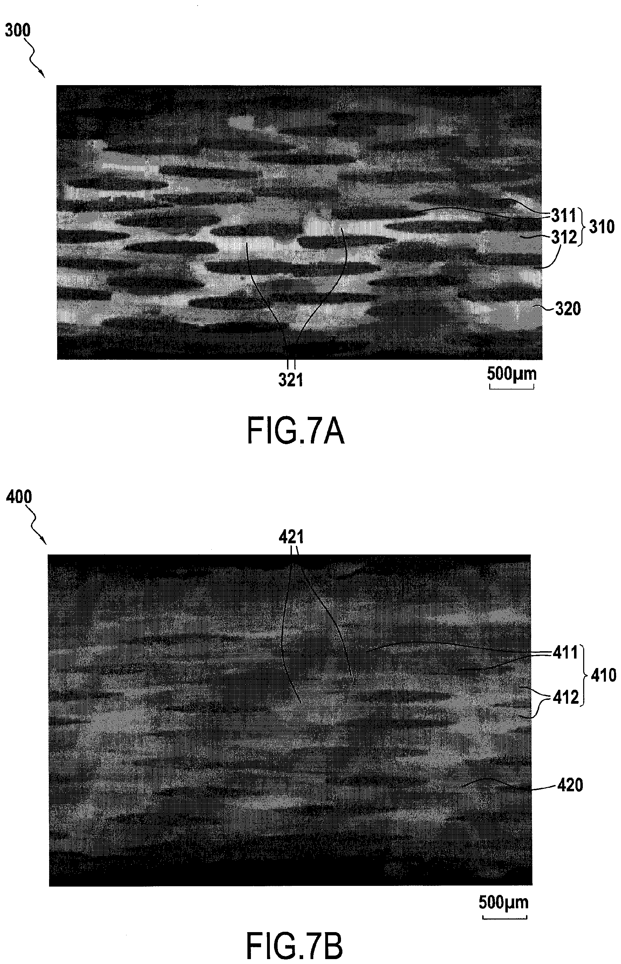

Les figures 7A, 7B et 7C sont des photographies microscopiques d'une coupe dans le sens chaîne (la longueur de la photographie correspondant au sens chaîne et la hauteur de la photographie correspondant au sens z) respectivement de pièces 300, 400, 500 chacune réalisée en matériau composite oxyde/oxyde selon l'invention, à savoir ici un renfort en fibres alumine densifié par une matrice alumine.

Sur la figure 7A, le renfort fibreux 310 de la pièce 300 a été formé ici par tissage 3D entre des couches de fils de trame 311 et de fils de chaîne 312 suivant une armure multisatin présentant une contexture en chaîne et en trame de 10 fils /cm et un taux volumique de fibres de 43,4%.

Sur la figure 7B, le renfort fibreux 410 de la pièce 400 a été formé ici par tissage 3D entre des couches de fils de trame 411 et de fils de chaîne 412 suivant une armure interlock présentant une contexture en chaîne de 12 fils/cm et en trame de 5 fils /cm et un taux volumique de fibres de 44,8%.

Sur la figure 7C, le renfort fibreux 510 de la pièce 500 a été formé ici par tissage 3D entre des couches de fils de trame 511 et de fils de chaîne 512 suivant une armure interlock présentant une contexture en chaîne et en trame de 12 fils /cm et un taux volumique de fibres de 43,5%.

Les pièces 300, 400 et 500 ont été fabriquées de la même manière que décrite précédemment, c'est-à-dire par voie APS suivie d'un séchage et d'un frittage de la préforme chargée.

L'armure de tissage, la contexture et le taux volumique de fibres définis pour les renforts fibreux 310, 410 et 510 conduisent à former respectivement des blocs 321, 421 et 521 de matrice 320, 420 et 520 dans le matériau qui présente, dans n'importe quelle direction, une dimension qui est inférieure à cinq fois la section maximale des fils du renfort. Comme on peut le voir sur les figures 7A, 7B et 7C, la limitation de la taille des blocs de matrice à moins de cinq fois la section maximale des fils du renfort étant respectée, aucune fissure n'est présente dans le matériau. Les pièces 300, 400 et 500 présentent, par conséquent, des propriétés mécaniques bien supérieures à celle de la pièce 200.

Le tableau ci-dessous indique les valeurs obtenues en terme de masse surfacique Ms, épaisseur de plaque e, densité d (fibre alumine) et taux volumique de fibres Tvf pour les pièces des figures 6, 7A, 7B et 7C.

| Pièce | Texture | Ms (g/m$^2$) | e (mm) | d | TVf |
|---|---|---|---|---|---|
| Pièce 200 (figure 6) | Interlock 8/8 | 6667 | 4,5 | 3,9 | 38 |
| Pièce 300 (figure 7A) | Multisatin 10/10 | 5420 | 3,2 | 3,9 | 43,4 |
| Pièce 400 (figure 7B) | Interlock 12/5 | 5420 | 3,1 | 3,9 | 44,8 |
| Pièce 500 (figure 7C) | Interlock 12/12 | 5770 | 3,4 | 3,9 | 43,5 |

On constate que la pièce 200 de la figure 6 est la seule qui présente un taux volumique de fibres qui n'est pas compris entre 40% et 51%. On constate également que la pièce 200 est la seule qui comprend des fissures dans son matériau en raison de la présence de blocs de matrice ayant au moins dans une direction, une dimension qui est supérieure à cinq fois la section maximale des fils du renfort.

Le procédé de la présente invention permet de fabriquer des pièces en matériau composite oxyde/oxyde à partir d'une texture fibreuse tissée tridimensionnelle et par voie APS qui sont parfaitement homogènes dans leur volume et qui sont dépourvues de fissures et de porosités. Ces pièces conformes à l'invention présentent les propriétés mécaniques suivantes, mesurées en traction monotone, à température ambiante et dans le sens chaîne :

- module d'élasticité compris entre 120 GPa et 170 GPa,
- déformation à rupture au moins égale à 0,35%,
- contrainte à rupture supérieure à 250MPa.

Bien que les fils du renfort fibreux tissé 3D du matériau oxyde/oxyde d'une pièce selon l'invention peuvent être recouverts d'une interphase, le procédé de l'invention permet de réaliser des pièces en composite oxyde/oxyde avec un renfort fibreux tissé 3D sans interphase sur les fils et, bien entendu, sans fissure dans le matériau.

## Revendications

1. Pièce en matériau composite oxyde/oxyde comprenant un renfort fibreux constitué d'une pluralité de couche de fils de chaîne et de couches de fils de trame liées entre elles suivant un tissage tridimensionnel, les espaces présents entre les fils du renfort étant remplis par une matrice en oxyde réfractaire,
   **caractérisée en ce que** le renfort fibreux présente une armure de tissage choisie parmi une des armures suivantes : interlock, multi-toile, multi-satin et multi-sergé, et une contexture en chaîne et en trame comprise entre 4 et 20 fils/cm, et **en ce que** le renfort fibreux présente un taux volumique de fibres compris entre 40% et 51%.

2. Pièce selon la revendication 1, **caractérisée en ce qu'**elle présente en traction monotone, à température ambiante et dans le sens chaîne :

   - un module d'élasticité compris entre 120 GPa et 170 GPa,
   - une déformation à rupture au moins égale à 0,35%,
   - une contrainte à rupture supérieure à 250MPa.

3. Pièce selon la revendication 1 ou 2, **caractérisée en ce que** les fils du renfort fibreux sont formés de fibres constituées d'un ou plusieurs des matériaux suivants : l'alumine, la mullite, la silice, un aluminosilicate et un borosilicate.

4. Pièce selon l'une quelconque des revendications 1 à 3, **caractérisée en ce que** le matériau de la matrice est choisi parmi :

   l'alumine, la mullite, la silice, un aluminosilicate et un aluminophosphate.

5. Procédé de fabrication d'une pièce en matériau composite oxyde/oxyde selon la revendication 1 comprenant les étapes suivantes :

   - formation d'une texture fibreuse par tissage tridimensionnel de fils en oxyde réfractaire,
   - compactage de ladite texture fibreuse,

- placement d'un côté de la texture fibreuse d'une barbotine contenant une poudre submicronique de particules d'oxyde réfractaire,
- établissement d'une différence de pression pour forcer la barbotine à traverser la texture fibreuse,
- filtration du liquide de barbotine ayant traversé la texture fibreuse pour retenir la poudre de particules d'oxyde réfractaire à l'intérieur de ladite texture, et
- séchage de la préforme chargée,
- frittage de la poudre submicronique de particules d'oxyde réfractaire afin de former une matrice d'oxyde réfractaire dans la préforme,

**caractérisé en ce que**, lors de l'étape de la formation de la texture fibreuse, les fils sont tissés suivant une armure de tissage choisie parmi une des armures suivantes : interlock, multi-toile, multi-satin et multi-sergé, avec une contexture en chaîne et en trame comprise entre 4 et 20 fils/cm et **en ce que**, après l'étape de compactage, ladite texture fibreuse présente un taux volumique de fibres compris entre 40% et 51%.

6. Procédé selon la revendication 5, **caractérisée** e ce que les fils de la préforme sont formés de fibres constituées d'un ou plusieurs des matériaux suivants : l'alumine, la mullite, la silice, un aluminosilicate et un borosilicate.

7. Procédé selon la revendication 5 ou 6, **caractérisé en ce que** les particules submicroniques sont en un matériau choisi parmi : l'alumine, la mullite, la silice, un aluminosilicate et un aluminophosphate.

**Patentansprüche**

1. Teil aus Oxid/Oxid-Verbundwerkstoff, umfassend eine Faserverstärkung, die von einer Vielzahl von Kettfadenlagen und von Schussfadenlagen, welche durch ein dreidimensionales Weben untereinander verbunden sind, gebildet ist, wobei die zwischen den Fäden der Verstärkung vorhandenen Räume mit einer feuerfesten Oxid-Matrix ausgefüllt sind,
   **dadurch gekennzeichnet, dass** die Faserverstärkung eine Webbindung, die aus einer der folgenden Bindungen ausgewählt ist: Interlock-, Multi-Leinwand-, Multi-Satin- und Multi-Serge-, sowie eine Fadendichte in Kette und Schuss im Bereich zwischen 4 und 20 Fäden/cm aufweist, und dass die Faserverstärkung einen Volumenanteil an Fasern im Bereich zwischen 40 % und 51 % aufweist.

2. Teil nach Anspruch 1, **dadurch gekennzeichnet, dass** es monoton zugbelastet, bei Raumtemperatur und in Kettrichtung aufweist:

   - ein Elastizitätsmodul im Bereich zwischen 120 GPa und 170 GPa,
   - eine Bruchverformung von wenigstens gleich 0,35 %,
   - eine Bruchspannung von mehr als 250 MPa.

3. Teil nach Anspruch 1 oder 2, **dadurch gekennzeichnet, dass** die Fäden der Faserverstärkung von Fasern gebildet sind, die aus einem oder mehreren der folgenden Materialien bestehen: Aluminiumoxid, Mullit, Siliziumdioxid, einem Aluminosilikat und einem Borosilikat.

4. Teil nach einem der Ansprüche 1 bis 3, **dadurch gekennzeichnet, dass** das Material der Matrix ausgewählt ist aus: Aluminiumoxid, Mullit, Siliziumdioxid, einem Aluminosilikat und einem Aluminophosphat.

5. Verfahren zur Herstellung eines Teils aus Oxid/Oxid-Verbundwerkstoff nach Anspruch 1, das die folgenden Schritte umfasst:

   - Bilden einer Faserstruktur durch dreidimensionales Weben von Fäden aus feuerfestem Oxid,
   - Verdichten der Faserstruktur,
   - Anbringen eines Schlickers, der ein Submikron-Pulver von Partikeln aus feuerfestem Oxid enthält, auf einer Seite der Faserstruktur,
   - Herstellen einer Druckdifferenz, um den Schlicker dazu zu bewegen, die Faserstruktur zu durchlaufen,
   - Filtern der Schlickerflüssigkeit, welche die Faserstruktur durchlaufen hat, um das Pulver von Partikeln aus feuerfestem Oxid innerhalb der Struktur zurückzuhalten, und
   - Trocknen des beladenen Vorformlings,
   - Sintern des Submikron-Pulvers von Partikeln aus feuerfestem Oxid, um eine feuerfeste Oxid-Matrix in dem Vorformling zu bilden,

**dadurch gekennzeichnet, dass** während des Schrittes der Bildung der Faserstruktur die Fäden in einer Webbindung gewebt werden, die aus einer der folgenden Bindungen ausgewählt ist: Interlock-, Multi-Leinwand-, Multi-Satin- und Multi-Serge-, mit einer Fadendichte in Kette und Schuss im Bereich zwischen 4 und 20 Fäden/cm, und dass die Faserstruktur nach dem Verdichtungsschritt einen Volumenanteil an Fasern im Bereich zwischen 40 % und 51 % aufweist.

6. Verfahren nach Anspruch 5, **dadurch gekennzeichnet, dass** die Fäden des Vorformlings von Fasern gebildet sind, die aus einem oder mehreren der folgenden Materialien bestehen: Aluminiumoxid, Mullit, Siliziumdioxid, einem Aluminosilikat und einem Borosilikat.

7. Verfahren nach Anspruch 5 oder 6, **dadurch gekennzeichnet, dass** die Submikron-Partikel aus einem Material bestehen, das ausgewählt ist aus: Aluminiumoxid, Mullit, Siliziumdioxid, einem Aluminosilikat und einem Aluminophosphat.

## Claims

1. A part made of oxide/oxide composite material comprising fiber reinforcement constituted by a plurality of warp yarn layers and of weft yarn layers interlinked by three-dimensional weaving, with the spaces present between the reinforcing yarns being filled with a refractory oxide matrix;
   the part being **characterized in that** the fiber reinforcement presents a weave selected from the following weaves: interlock; multi-plain; multi-satin; and multi-serge; and warp and weft thread counts lying in the range 4 yarns/cm to 20 yarns/cm, and **in that** the fiber reinforcement presents a fiber volume fraction lying in the range 40% to 51%.

2. A part according to claim 1, **characterized in that** it presents, in monotonic traction, at ambient temperature, and in the warp direction:

   • a modulus of elasticity lying in the range 120 GPa to 170 GPa;
   • a breaking deformation of not less than 0.35%; and
   • a breaking stress greater than 250 MPa.

3. A part according to claim 1 or claim 2, **characterized in that** the yarns of the fiber reinforcement are made of fibers constituted by one or more of the following materials: alumina; mullite; silica; an aluminosilicate; and a borosilicate.

4. A part according to any one of claims 1 to 3, **characterized in that** the material of the matrix is selected from: alumina; mullite; silica; an aluminosilicate; and an aluminophosphate.

5. A method of fabricating an oxide/oxide composite material part according to claim 1, the method comprising the following steps:

   • forming a fiber texture by three-dimensional weaving of refractory oxide yarns;
   • compacting said fiber texture;
   • placing on one side of the fiber texture a slip containing a submicrometer powder of refractory oxide particles;
   • establishing a pressure difference to force the slip to pass through the fiber texture;
   • filtering the liquid of the slip that has passed through the fiber texture so as to retain the powder of refractory oxide particles inside said texture;
   • drying the filled preform; and
   • sintering the submicrometer powder of refractory oxide particles in order to form a refractory oxide matrix in the preform;

   the method being **characterized in that** during the step of forming the fiber texture the yarns are woven with a weave selected from the following weaves: interlock; multi-plain; multi-satin; and multi-serge; with warp and weft thread counts lying in the range 4 yarns/cm to 20 yarns/cm, and **in that**, after the compacting step, said fiber reinforcement presents a fiber volume fraction lying in the range 40% to 51%.

6. A method according to claim 5, **characterized in that** the yarns of the preform are made of fibers constituted by one or more of the following materials: alumina; mullite; silica; an aluminosilicate; and a borosilicate.

7. A method according to claim 5 or claim 6, **characterized in that** the submicrometer particles are made of a material selected from: alumina; mullite; silica; an aluminosilicate; and an aluminophosphate.

FIG.1

FIG.2

FIG.3

FIG.4

FIG.5

FIG.6

300

311
312 } 310

320

321

# FIG.7A

400

421

411
412 } 410

420

500μm

# FIG.7B

500

521

511 }
512 } 510

520

## FIG.7C

500µm

Armure
de tissage

Taux
volumique
de fibres

Nombre de
filaments
par fil

Contexture
chaîne et
trame

4

400

40

D

Multitoile

Multiserge

20

Multisatin

700

Interlock

51

## FIG.8

**EP 3 110 774 B1**

**Documents brevets cités dans la description**

- EP 0130105 A